# EUROPÄISCHE PATENTANMELDUNG

(11) **EP 1 767 958 A2**
(43) Veröffentlichungstag der Anmeldung: **28.03.2007**
(21) Anmeldenummer: 05022090.4
(22) Anmeldetag: 11.10.2005
(51) Int. Cl.: G01S 5/00

(54) **Tragbare Kommunikationsvorrichtung mit Lokalisierungssystemen**

(30) Priorität: 07.09.2005 DE 202005014148 U
(71) Anmelder: GCD Systeme GmbH, 91052 Erlangen (DE)
(72) Erfinder: Buck, Thilo, 91052 Erlangen (DE); Leißner, Jürgen, 91052 Erlangen (DE); Fritsch, Helmut, 91052 Erlangen (DE)
(74) Vertreter: Hannke, Christian

(57) **Zusammenfassung**

Eine tragbare Kommunikationsvorrichtung mit wenigstens einer ersten Empfangseinrichtung (3), die zum Empfang von Satellitenpositionssignalen (11) geeignet ist, wenigstens einer zweiten von ersten Empfangseinrichtung (3) unabhängigen Empfangseinrichtung, die zum Empfang von elektromagnetischen Positionssignalen (12) geeignet ist und wenigstens einer Sendeeinrichtung (6), die wenigstens zeitweise ein Ortungssignal (14) aussendet, wobei das Ortungssignal (14) eine aus dem Positionssignal (11,12) abgeleitete Information enthält.

## Beschreibung

Die vorliegende Erfindung bezieht sich auf eine tragbare Kommunikationsvorrichtung. Unter einer Kommunikationsvorrichtung wird eine Vorrichtung verstanden, mittels derer Daten im weitesten Sinne d.h. beispielsweise Sprachinformationen, Bildinformationen, Signale und dergleichen ausgetauscht werden können.

Derartige Kommunikationsvorrichtungen sind aus dem Stand der Technik bekannt und weisen unterschiedliche Funktionen auf. So ist es beispielsweise bei Navigationssystemen in Kraftfahrzeugen bekannt, daß diese Satellitenpositionssignale empfangen und anhand dieser Signale die aktuelle Position des Fahrzeugs berechnen.

Diese Navigationssysteme setzen jedoch einen direkten Sichtkontakt zu den betreffenden Satelliten voraus und arbeiten daher nicht in Tunnels, Garagen und dergleichen. Damit sind derartige Systeme auch im Innenbereich nicht anwendbar.

Bei vielen Anwendungen ist es jedoch wünschenswert, ein System zu schaffen, welches sowohl im Außenbereich als auch im Innenbereich arbeitet. Dies ist beispielsweise interessant, wenn die aktuelle Position einer Person wie eines Wachmanns innerhalb eines Firmengeländes sowohl innerhalb von Gebäuden als auch außerhalb von Gebäuden überwacht werden soll. Die Aufgabe wird erfindungsgemäß durch eine tragbare Kommunikationseinrichtung nach Anspruch 1 und einer Kommunikationsanlage nach Anspruch 7 gelöst.

Vorteilhafte Ausführungsformen und Weiterbildungen sind Gegenstand der Unteransprüche.

Die erfindungsgemäße Kommunikationsvorrichtung weist wenigstens eine erste Empfangseinrichtung auf, die zum Empfang von Satellitenpositionssignalen geeignet ist. Daneben ist wenigstens eine zweite von der ersten Empfangseinrichtung unabhängige Empfangseinrichtung vorgesehen, die zum Empfang von elektronmagnetischen Positionssignalen geeignet ist, sowie wenigstens eine Sendeeinrichtung, die wenigstens zeitweise ein Ortungssignal sowie ein Identifikationssignal aussendet. Dabei enthält das Ortungssignal eine aus wenigstens dem Satellitenpositionssignal oder dem Funkpositionssignal abgeleitete Information. Vorzugsweise sendet die Sendeeinrichtung auch ein Identifikationssignal aus, das wenigstens eine für die Kommunikationsvorrichtung charakteristische Information enthält. Bevorzugt ist auch wenigstens eine Empfangseinrichtung, besonders bevorzugt die zweite Empfangseinrichtung, zum Empfang von Identifikationssignalen geeignet.

Unter unabhängigen Empfangseinrichtungen wird verstanden, daß die beiden Kommunikationsvorrichtungen unabhängig voneinander arbeiten können. Dies bedeutet, daß sie sowohl gleichzeitig arbeiten können, als auch entweder die eine oder die andere, je nach dem Anwendungsbereich. So wird bei der Benutzung der Kommunikationsvorrichtung außerhalb von Gebäuden die erste Empfangseinrichtung aktiv, welche die Satellitenpositionssignale empfängt und aufgrund dieser Signale die Position der Vorrichtung berechnet. Innerhalb von Gebäuden, in denen Satellitenpositionssignale üblicherweise nicht empfangbar sind, wird die zweite Empfangseinrichtung aktiv, die bevorzugt elektromagnetische Signale von vorzugsweise festangeordneten Sendern empfängt und auf diese Weise ihre eigene Position innerhalb eines Raumes oder Gebäudes bestimmt.

Als Ortungssignal wird im Rahmen der Erfindung jedes von wenigstens einer Einrichtung der erfindungsgemäßen Vorrichtung ausgesendete Signal verstanden, welches durch seine Eigenschaften beim Empfang durch eine weitere Einrichtung, insbesondere durch die in ihm erhaltenen Informationen über die sendende Einrichtung und deren Position deren Ortung ermöglicht.

Als Positionssignal wird im Rahmen der Erfindung jedes wenigstens von einer Einrichtung der erfindungsgemäßen Vorrichtung empfangene Signal verstanden, mittels dessen in dieser Einrichtung wenigstens eine Information zur geometrischen Position dieser Einrichtung ermittelbar ist.

Als Ausgabeeinrichtung wird im Rahmen der Erfindung jede Einrichtung verstanden, die für die menschlichen Sinne wahrnehmbare Reize erzeugt, bevorzugt optische Reize in Form optischer Anzeigen und Bildschirme und/oder akustische Reize in Form von Summen durch Lautsprecher oder in Form von taktilen Reizen.

In einer weiteren bevorzugten Ausführungsform weist die Kommunikationsvorrichtung eine weitere Sendeeinrichtung zum Aussenden von Funksignalen auf oder die erste Sendeeinrichtung ist zum Übermitteln unterschiedlicher Informationen geeignet. Dabei weist vorzugsweise die Kommunikationsvorrichtung eine optische Erkennungseinrichtung für Barcodes oder dergleichen auf. Die Sendeeinrichtung gibt ein diesen Barcodesystemen entsprechendes Signal weiter. Auf diese Weise kann die Kommunikationsvorrichtung eingesetzt werden, um Smart Lables oder dergleichen zu erkennen und ein diesem Label entsprechendes Signal an eine Zentraleinheit weiter zu geben.

Bei einer weiteren bevorzugten Ausführungsform sind die elektromagnetischen Positionssignale aus einer Gruppe von Positionssignalen ausgewählt, die Funksignale, Infrarotsignale oder dergleichen enthält. Daneben kommen auch Ultraschallsignale in Betracht. Dementsprechend kann es sich bei der Empfangseinrichtung um einen Empfänger für infrarotes Licht, für elektromagnetische Wellen wie Funksignale, oder auch um einen Empfänger für Ultraschallsignale handeln. Auch können mehrere unterschiedliche Empfängertypen vorgesehen sein, um die Vorrichtung anpassungsfähig für unterschiedliche Signalgeber auszugestalten.

In einer weiteren bevorzugten Ausführungsform weist die Kommunikationsvorrichtung wenigsten einen Bewegungssensor auf, der eine Bewegung der Kommunikationsvorrichtung erfaßt. Vorzugsweise sind mehrere Bewegungssensoren, beispielsweise drei Bewegungssensoren vorgesehen, die eine Bewegung der Kommunikationsvorrichtung in drei zueinander senkrechten Richtungen erfaßt. Der Vorteil dieser Bewegungssensoren liegt darin, daß beispielsweise mittels dieser Sensoren eine Todmannschaltung verwirklicht werden kann. Wenn der Träger des Geräts aus irgendeinem Grund, infolge Ohnmacht oder infolge eines Angriffs durch Dritte, bewußtlos wird und sich nicht mehr bewegt, wird dies von den Bewegungssensoren erfaßt und diese können bewirken, daß ein Alarm ausgelöst wird.

Auch kann eine derartige Todmannschaltung die Auslösung eines Alarms bewirken, wenn über einen vorgegebenen Zeitraum hinweg eine bestimmte Eingabe durch den Benutzer nicht vorgenommen wird, beispielsweise der Druck einer bestimmten Taste.

In einer weiteren bevorzugten Ausführungsform ist der Bewegungssensor mit einer Prozessoreinrichtung signalverbunden, wobei die Prozessoreinrichtung aus wenigstens einem Ausgabesignal des Bewegungssensors bezüglich einer bekannten Startposition der Kommunikationsvorrichtung deren aktuelle Position ermittelt. So ist es möglich, bei einem Ausfall der Empfangseinrichtung aus der letzten Position, bei der noch ein Empfangssignal verfügbar war, mit Hilfe der Bewegungssensoren die aktuelle Position der Vorrichtung und damit die Position ihres Trägers zu ermitteln. Als signalverbunden werden im Rahmen der Erfindung wenigstens zwei Einrichtungen angesehen, zwischen denen Signale ausgetauscht werden können.

In einer weiteren bevorzugten Ausführungsform weist die Kommunikationsvorrichtung eine Spracheingabeeinrichtung auf. Über diese Spracheingabeeinrichtung kann der Benutzer beispielsweise mit Dritten, beispielsweise einer Zentrale in Sprachverbindung treten. Auch kann die Spracheingabeeinrichtung derart gestaltet sein, daß der Benutzer in die Kommunikationsvorrichtung Sprachbefehle eingeben und damit beispielsweise ein Menü der Kommunikationsvorrichtung steuern kann.

Vorzugsweise handelt es sich bei der Spracheingabeeinrichtung um ein Mikrofon.

Die vorliegende Erfindung ist ferner auf eine Kommunikationsanlage gerichtet, die wenigstens eine Kommunikationsvorrichtung der obenbeschriebenen Art aufweist. Bevorzugt weist die Kommunikationsanlage eine Sendeeinheit zur Ausgabe der Positionssignale auf. Bei diesen Sendeeinheiten handelt es sich vorzugsweise um sogenannte Baken, die im Inneren von Gebäuden an festbestimmten Stellen montiert werden können. Aufgrund ihrer Größe und ihres Gewichts können die Baken auch an solchen Stellen montiert werden, die für Dritte nicht einsehbar ist, sodaß der Träger der Kommunikationsvorrichtung nicht weiß, an welchen Stellen die einzelnen Sendeeinheiten montiert sind.

Vorzugsweise sendet die Sendeeinheit Signale mit einer vorgegebenen Trägerfrequenz und insbesondere aber nicht ausschließlich einer Frequenz von 868 MHz aus. Diese Signale werden von der Kommunikationsvorrichtung erfaßt. Bevorzugt weisen diese RFID-Signale Identifikationssignale auf, damit die Kommunikationsvorrichtung erkennen kann von welcher Sendeeinheit die jeweiligen Signale stammen. Aufgrund dieser Informationen kann die Kommunikationsvorrichtung ihren eigenen Standort bestimmen. Wenn beispielsweise die Kommunikationsvorrichtung ein bestimmtes Positionssignal einer bestimmten Sendeinheit erfaßt, kann daraus geschlossen werden, daß es sich in einem bestimmten Bereich um diese Sendeeinheit herum befindet. Wenn die Kommunikationsvorrichtung zwei Signale von zwei Sendeeinheiten erfaßt, kann daraus geschlossen werden, daß sie sich in einem geometrischen Schnittbereich zwischen den Bereichen der jeweiligen Sendeeinheiten befindet.

In einer bevorzugten Ausführungsform weisen die Sendeeinheiten Signale für einen Nahbereichserfassung und Signale für eine Weitbereichserfassung auf. Im Rahmen der Nahbereichserfassung können Entfernungen zwischen 30 cm und 8 m bevorzugt zwischen 50 cm und 7 m und besonders bevorzugt bis zu 5 m erfaßt werden. Die Weitbereichserfassung erlaubt eine Erfassung von Signalen in einem Bereich bis zu 30 m. Auf diese Weise kann die Kommunikationsvorrichtung auch feststellen in welcher Entfernung sie sich zu einer bestimmten Sendeeinheit befindet.

Bevorzugt wird die Sendeeinheit durch eine Solarzelleneinrichtung betrieben. Damit ist die Sendeeinheit unabhängig von äußeren Energiequellen und damit autark. Zu diesem Zweck weist die Sendeeinheit Solarpanele oder dergleichen auf, die eine Stromversorgung bereits ab Lichtstärken von 20 Lux ermöglichen.

Vorzugsweise wird die Sendeeinheit in Bereichen montiert, in denen relativ viel Licht zur Verfügung steht, beispielsweise in unmittelbarer Nähe zu Beleuchtungskörpern.

Durch die geeignete Anordnung einer Vielzahl von Sendeeinheiten kann im Wesentlichen der gesamte Innenraum eines Gebäudes abgedeckt werden, und damit stets festgestellt werden, im welchen Bereich sich der Benutzer der Kommunikationsvorrichtung befindet.

In einer weiteren bevorzugten Ausführungsform wird die Sendeeinheit durch Induktionssignale betrieben. So ist es beispielsweise möglich, daß die Kommunikationsvorrichtung Signale an die Sendeeinrichtung sendet, die die Sendeeinheit gleichzeitig mit ausreichender Energie versorgen, sodaß diese das Positionssignal übermitteln kann.

In einer weiteren bevorzugten Ausführungsform weist die Kommunikationsanlage eine Empfangseinheit auf, welche das Ortungssignal empfängt und ein mit diesem Ortungssignal korrespondierendes Signal ausgibt. Bei dieser Empfangseinheit handelt es sich beispielsweise um eine zentrale Funkeinheit, die die Ortungssignale der Kommunikationsvorrichtungen aufnimmt und diese beispielsweise an einen Zentralrechner weitergibt. Auf diese Weise kann über einen Zentralrechner der Standort einer Vielzahl von Kommunikationsvorrichtungen überprüft werden. Bevorzugt sendet die Kommunikationsvorrichtung auch ein Identifikationssignal aus, welches diese eindeutig identifiziert. Auf diese Weise kann eine Vielzahl von Kommunikationsvorrichtungen unterschieden werden.

In einer weiteren bevorzugten Ausführungsform weist die Kommunikationsanlage eine Sprachkommunikationseinrichtung auf, mittels derer der Benutzer Sprachinformationen eingeben kann. Dabei kann es sich beispielsweise um ein Funkgerät handeln, welches mit der Kommunikationsvorrichtung in Verbindung steht. Über dieses Funkgerät kann der Benutzer mit einer Zentrale oder anderen Benutzern in Kontakt treten.

Bevorzugt ist die Sprachkommunikationseinrichtung über eine elektrische Leitung mit der Kommunikationsvorrichtung verbunden. Sowohl die Kommunikationsvorrichtung als auch die Sprachkommunikationseinrichtung können oder werden vom gleichen Benutzer getragen, sodaß insoweit die Verbindung der beiden Geräte durch eine elektrische Leitung erfolgen kann. Jedoch ist auch eine drahtlose Kommunikation zwischen der Sprachkommunikationseinrichtung und der Kommunikationsvorrichtung denkbar.

Weitere Vorteile und Ausführungsformen ergeben sich aus den beigefügten Zeichnungen. Darin zeigen:
- Fig. 1: eine erfindungsgemäße Kommunikationsvorrichtung;
- Fig. 2: ein Blockdiagramm einer erfindungsgemäßen Kommunikationsvorrichtung; und
- Fig. 3: eine erfindungsgemäße Kommunikationsanlage.

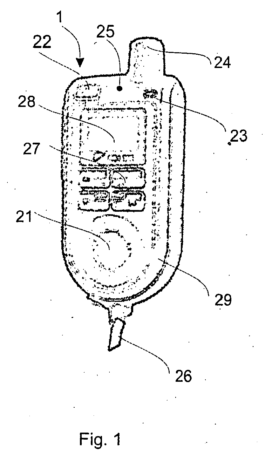

Figur 1 zeigt eine erfindungsgemäße Kommunikationsvorrichtung. Diese weist ein Display 28 auf, welches in dieser Ausführungsform eine 128 x 64. Matrix aufweist. Diese Displayanzeige ist frei konfigurierbar.

Das Bezugszeichen 27 bezieht sich auf eine Betätigungstaste, wobei in dieser Ausführungsform vier Betätigungstasten vorgesehen sind, die ebenfalls frei konfigurierbar sind.

Das Bezugszeichen 23 bezieht sich auf eine Statusanzeige, die im Betrieb der Kommunikationsvorrichtung anzeigt. Über eine Antenne 24 können Signale empfangen bzw. ausgegeben werden.

Die Kommunikationsvorrichtung 1 verfügt über einen Lautsprecher 21 zur Ausgabe von Sprachinformationen. Daneben ist ein Mikrophon 25 vorgesehen, das dem Benutzer die Eingabe von Sprachinformationen erlaubt. Das Bezugszeichen 22 bezieht sich auf eine Notruftaste.

Die Kommunikationsvorrichtung weist ferner einen (nicht gezeigten) Vibrationsmotor auf, um an den Benutzer taktile Informationen, beispielsweise Alarmausgaben oder dergleichen zu übermitteln. Damit können über die Kommunikationsvorrichtung sowohl akustisch als auch optisch als auch über den Vibrationsalarm Informationen ausgegeben werden.

Das Gerät verfügt in dieser Ausführungsform über eine RS232/V24 Schnittstelle. Es ist jedoch auch möglich, eine Schnittstelle vorzusehen, die an verschiedene Funkgeräte oder andere Übertragungssysteme angepaßt werden kann.

Das Bezugszeichen 29 bezieht sich auf ein Gehäuse und das Bezugszeichen 26 auf eine Leitung (die unter anderem die oben erwähnte Schnittstelle enthält), über welche die Kommunikationsvorrichtung mit weiteren Geräten verbunden ist bzw. sein kann.

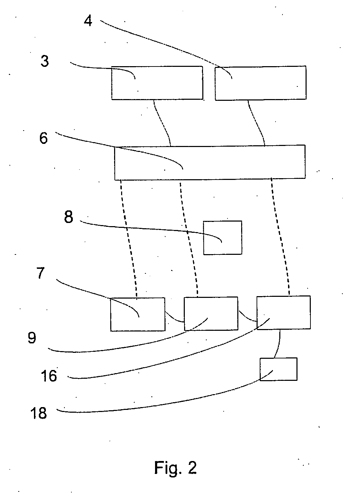

Figur 2 zeigt ein Blockschaltbild der erfindungsgemäßen Kommunikationsvorrichtung. Diese weist eine erste Empfangseinrichtung 3 auf, um Satellitenpositionssignale zu empfangen. Bevorzugt werden die Signale ohne Bindung an ein leitendes Material, d. h. durch den freien Raum zu übertragen, wie insbesondere durch elektromagnetische Wellen (z. B. Funkwellen oder Infrarotlicht) sowie durch einen gaserfüllten Raum, (z. B. Schallwellen). Dabei werden durch den Begriff signalverbunden, sowohl uni- als auch bidirektionale Signalübertragungsstrecken erfaßt.

Bevorzugt ist die Empfangseinrichtung zum Empfang von Signalen des Global Postionning Systems (GPS) geeignet. Bevorzugt weist die Einrichtung der erfindungsgemäßen Vorrichtung eine GPS Empfangseinrichtung auf. Besonders bevorzugt ist die erfindungsgemäße Empfangseinrichtung zum Empfang der Positionssignale zukünftiger Satellitennavigationssysteme, wie insbesondere des europäischen Systems Galileo, erweiterbar.

Mit Hilfe einer an differenzielles GPS (DGPS) angelehnten Technik, die bereits für andere Anwendungen Verwendung findet, können zivile GPS-Empfänger Genauigkeiten von unter einem Meter erreichen.

Das Bezugszeichen 4 bezieht sich auf die zweite Empfangseinrichtung, welche elektromagnetische Positionssignale empfängt. Diese Empfangseinrichtung dient zum Empfang von Signalen innerhalb von Gebäuden, in denen kein Satellitenpositionssignal zur Verfügung steht. Die von den Empfangseinrichtungen 3 und 4 aufgenommen Signale werden vorzugsweise verarbeitet und an eine Sendeeinrichtung 6 weitergegeben. Diese Sendeeinrichtung 6 sendet das Ortungssignal aus, wobei dieses Ortungssignal eine Information enthält, die entweder von der Empfangseinrichtung 3 stammt oder der Empfangseinrichtung 4 oder auch von beiden stammt. Aufgrund dieses ausgesendeten Signals kann die Position der Kommunikationsvorrichtung 1 festgestellt werden. Das Bezugszeichen 8 bezieht sich auf eine zentrale Steuerungseinrichtung zur Verarbeitung der oben erwähnten Signale.

Das Bezugszeichen 7 bezieht sich auf eine weitere Sendeinrichtung, mit der RFID-Signale beispielsweise Signale, die zu eingescannten Barcodes korrespondieren, gesendet werden können. Doch kann auch diese Aussendung mit Hilfe der Sendeinrichtung 6 erfolgen. Das Bezugszeichen 9 bezieht sich auf eine bevorzugt optisch arbeitende Erkennungseinrichtung mittels derer Barcodesysteme oder dergleichen oder Smart Lables ausgelesen werden können.

Das Bezugszeichen 16 bezieht sich auf einen Bewegungssensor, der eine Bewegung der Kommunikationsvorrichtung detektiert. Wie oben ausgeführt, kann es sich dabei um einen oder mehrere Sensoren handeln, die die Bewegungen in drei zueinander senkrechten Richtungen und damit im Raum festhalten. Das Bezugszeichen 18 bezieht sich auf eine optionale Prozessoreinrichtung, mit der mit Hilfe der von den Bewegungssensoren 16 ausgegebenen Signalen der Ort festgestellt werden kann, an dem sich die Vorrichtung bewegt hat. Dies ist, wie oben erwähnt, besonders dann interessant, wenn aus gleich welchen Gründen keine Positionssignale zur Verfügung stehen, die von den Empfangseinrichtungen 3 oder 4 aufgenommen werden können.

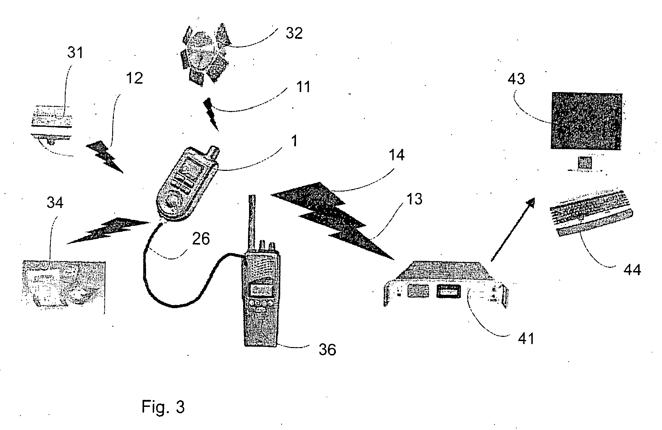

Figur 3 zeigt eine erfindungsgemäße Kommunikationsanlage. Die Kommunikationsvorrichtung 1 empfängt die von einem Satelliten 32 gesendeten Satellitenpositionssignale 11. Zur genauen Lokalisierung sind wenigstens drei derartiger Signale von drei unterschiedlichen Satelliten nötig.

In Räumen, in denen kein Satellitenpositionssignal zur Verfügung steht, wird mittels einer oder einer Vielzahl von Baken 31 ein Positionssignal 12 an die Kommunikationsvorrichtung 1 übertragen. Mittels der oben erwähnten optischen Erfassungseinrichtung 9 können Smart Lables oder Barcodes 34 erfaßt werden und entsprechende Signale mittels eines Ausgabesignals 13 ausgeben werden.

Bezugzeichen 36 bezieht sich auf ein Funkgerät, welches in dieser Ausführungsform über eine Leitung mit der Kommunikationsvorrichtung 1 verbunden ist. Dieses Funkgerät dient als Drahtlosübertragungsgerät zur Übertragung von Sprachinformationen. Über die Kommunikationsvorrichtung 1 und vorzugsweise auch das Funkgerät 36 werden Signale 14 an eine zentrale Empfangseinheit 41 ausgegeben. Damit ist sowohl eine aktive als auch passive Notsignalisierung möglich. Optional kann das Funkgerät 36 auch der Stromversorgung der Kommunikationsvorrichtung 1 dienen. Daneben kann das Funkgerät auch die Funktion einer Datenschnittstelle wahrnehmen.

Die von der zentralen Empfangseinrichtung 41 aufgenommen Daten werden an einen Rechner 44 weitergegeben und können beispielsweise über einen Monitor 43 visualisiert werden.

Über eine speziell angepaßte Auswertungssoftware können die jeweils aktuelle Position des Benutzers und der Kommunikationsvorrichtung 1 festgestellt werden. Dabei erlaubt die Software einerseits eine Visualisierung von Positionsdaten und umgekehrt eine Überwachung bzw. Steuerung des Trägers der Kommunikationsvorrichtung. Auch können mit Hilfe der Software Statusmeldungen erfaßt werden, beispielsweise die von der Kommunikationsvorrichtung eingelesenen Smartlables, überwacht und katalogisiert werden.

Weiterhin können mit dieser Auswertungssoftware Meldungen und Statusinformationen ausgelöst und sämtliche Informationen gespeichert und dokumentiert werden. Auf diese Weise können letztlich alle Bewegungen des Trägers der Kommunikationsvorrichtung dokumentiert werden. Die Auswertungssoftware ist vorzugsweise anpassungsfähig an kundenspezifische Anforderungen.

Wie eingangs erwähnt, dient die vorliegende Erfindung zur Ortung von Personen im Innen- und Außenbereich sowie zur zeitnahen Standorterfassung von Personen. Damit kann die Vorrichtung sowohl zur Überwachung von Personen zu deren eigener Sicherheit als auch zu deren Überwachung im Sinne, beispielsweise eines Arbeitgebers, verwendet werden.

Die erfindungsgemäße Vorrichtung kann ferner zur Übermittlung von Mitteilungen in akustischer Weise oder auch als Datenkurzmitteilung zwischen Personen eingesetzt werden. Ferner kann die Vorrichtung zur Übertragung von Statusmeldungen verwendet werden. Über einen optionalen Barcodeleser oder eine RFID-Leseeinheit können Informationen über beispielsweise gelagerte Waren ausgegeben werden.

Damit dient die erfindungsgemäße Vorrichtung der Herstellung einschließlich der Sicherheit von Einsatzkräften vor Ort, unterstützt eine optimale Einsatzplanung, eine korrekte nachweisbare Standortbestimmung sowie eine Aufgabenverteilung, wobei dies akustisch oder über Datenübermittlung erfolgen kann. Auch ist eine aktive oder passive Notalarmauslösung möglich.

Die hier beschriebene Vorrichtung ist vielfach erweiterbar, wie dargestellt mit Funkgeräten, RFID-Lesegeräten, zusätzlichen Akkus und dergleichen mehr.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Kommunikationsvorrichtung
- 3: erste Empfangseinrichtung
- 4: zweite Empfangseinrichtung
- 6: Sendeeinrichtung
- 7: weitere Sendeeinrichtung
- 9: Erfassungseinrichtung
- 11: Satellitenpositionssignale
- 12: Positionssignal
- 13: Ausgabesignal
- 14: Signal
- 16: Bewegungssensoren
- 18: Prozessoreinrichtung
- 21: Lautsprecher
- 22: Notruftaste
- 23: Statusanzeige
- 24: Antenne
- 25: Mikrophon
- 26: Leitung
- 29: Gehäuse
- 31: Baken
- 32: Satellit
- 34: Barcodes
- 36: Funkgerät
- 41: zentrale Empfangseinheit
- 43: Monitor
- 44: Rechner

## Patentansprüche

1. Tragbare Kommunikationsvorrichtung (1) mit wenigstens einer ersten Empfangseinrichtung (3) die zum Empfang von Satellitenpositionssignalen (11) geeignet ist, wenigstens einer zweiten (4) von der ersten Empfangseinrichtung (3) unabhängigen Empfangseinrichtung, die zum Empfang von elektromagnetischen Positionssignalen (12) geeignet ist und wenigstens einer Sendeeinrichtung (6), die wenigstens zeitweise ein Ortungssignal (14) aussendet, wobei das Ortungssignal (14) eine aus wenigstens dem Satellitenpositionssignal (11) oder dem Positionssignal (12) abgeleitete Information enthält.

2. Kommunikationsvorrichtung nach Anspruch 1
**dadurch gekennzeichnet, daß**
diese eine weitere Sendeeinrichtung (7) zum Aussenden von Funk - Signalen aufweist.

3. Kommunikationsvorrichtung nach wenigstens einem der vorangegangenen Ansprüche,
**dadurch gekennzeichnet , daß**
die elektromagnetischen Positionssignale (12) aus einer Gruppe von Positionssignalen ausgewählt sind, die Funksignale, Infrarotsignale, Kombinationen hieraus oder dergleichen enthält.

4. Kommunikationsvorrichtung nach wenigstens einem der vorangegangenen Ansprüche,
**dadurch gekennzeichnet, daß**
die Kommunikationsvorrichtung (1) wenigstens einen Bewegungssensor (16) aufweist, der eine Bewegung der Kommunikationsvorrichtung (1) erfaßt.

5. Kommunikationsvorrichtung nach Anspruch 4
**dadurch gekennzeichnet, daß**
der Bewegungssensor (16) mit einer Prozessoreinrichtung (18) signalverbunden ist, wobei die Prozessoreinrichtung (18) aus wenigstens einem Ausgabesignal des Bewegungssensors (16) bezüglich einer bekannten Startposition der Kommunikationsvorrichtung (1) deren aktuelle Position ermittelt.

6. Kommunikationsvorrichtung nach wenigstens einem der vorangegangenen Ansprüche,
**dadurch gekennzeichnet,daß**
diese eine Spracheingabeeinrichtung (25) aufweist.

7. Kommunikationsanlage mit einer Kommunikationsvorrichtung nach wenigstens einem der vorangegangenen Ansprüche.

8. Kommunikationsanlage nach Anspruch 7
**dadurch gekennzeichnet, daß**
die Kommunikationsanlage eine Sendeeinheit (31) zur Ausgabe der Positionssignale (12) aufweist.

9. Kommunikationsanlage nach wenigstens einem der Ansprüchen 7-8
**dadurch gekennzeichnet, daß**
die Sendeeinheit (31) durch eine Solarzelleneinrichtung betrieben wird.

10. Kommunikationsanlage nach wenigstens einem der vorangegangenen Ansprüche 7 -9
**dadurch gekennzeichnet, daß**
diese eine Empfangseinheit (41) aufweist, welche das Ortungssignal (14) empfängt und ein diesem Ortungssignal (14) korrespondierendes Signal ausgibt.

11. Kommunikationsanlage nach wenigstens einem der vorangegangenen Ansprüche 7 -10
**dadurch gekennzeichnet, daß**
diese eine Sprachkommunikationseinrichtung (36) aufweist, mittels derer der Benutzer Sprachinformationen eingeben kann.
